(19) Europäisches Patentamt
European Patent Office
Office européen des brevets

(11) **EP 3 521 908 A1**

(12) **EUROPEAN PATENT APPLICATION**
published in accordance with Art. 153(4) EPC

(43) Date of publication:
**07.08.2019 Bulletin 2019/32**

(51) Int Cl.:
**G02C 7/10** *(2006.01)*  **G02B 5/22** *(2006.01)*

(21) Application number: **17856472.0**

(22) Date of filing: **29.09.2017**

(86) International application number:
**PCT/JP2017/035616**

(87) International publication number:
**WO 2018/062525 (05.04.2018 Gazette 2018/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.09.2016  JP 2016195243**

(71) Applicant: **Hoya Lens Thailand Ltd.
Pathumthani 12130 (TH)**

(72) Inventor: **TANAKA, Hisako
Tokyo 160-8347 (JP)**

(74) Representative: **Beckmann, Claus et al
Kraus & Weisert
Patentanwälte PartGmbB
Thomas-Wimmer-Ring 15
80539 München (DE)**

(54) **METHOD FOR MANUFACTURING SPECTACLE LENS**

(57)  Provided is a method for manufacturing a spectacle lens having a high cut ratio of light having a wavelength of 420 nm.

A method for manufacturing a spectacle lens includes a step of immersing a substrate in an immersion liquid containing a benzophenone-based UV absorber, a surfactant having a polyalkyleneoxy moiety, and an alcohol having an aromatic substituent. The substrate has a luminous transmittance of 70% or more after immersion.

## FIG. 1

EXAMPLE A2

EP 3 521 908 A1

**Description**

Technical Field

The present disclosure relates to a method for manufacturing a spectacle lens.

Background Art

In an optical member such as a spectacle lens, by cutting light rays in a blue region (wavelength region of 380 to 500 nm), glare is reduced, and visibility and contrast are improved. In addition, it is said that light rays in a blue region (380 to 500 nm) damage the retina or the like due to strong energy with respect to health of the eyes. Damage due to blue light is referred to as "blue light hazard". Particularly light around 420 nm on a low wavelength side is dangerous, and it is said that light in this region is desirably cut.

Patent Literature 1 describes a high light-resistant plastic lens characterized in that the plastic lens is impregnated with a UV absorber or the UV absorber is transferred on the plastic lens in order to suppress reduction in mechanical characteristics, that is, reduction in strength and to suppress coloring of a material itself due to a stabilizer, and a method for manufacturing the plastic lens.

Citation List

Patent Literature

Patent Literature 1: JP 5-105772 A

Summary of Invention

Technical Problem

According to the method of Patent Literature 1, in order to increase a cut ratio of light having a wavelength of 420 nm by impregnation with a UV absorber, it is necessary to increase the temperature of an impregnation liquid or to lengthen immersion time. Meanwhile, when a substrate of a spectacle lens is immersed in an immersion liquid at a high temperature or for a long time, surface roughness of the substrate surface occurs, and there is a limit to increase the cut ratio of light having a wavelength of 420 nm.

An object of an Example of the present disclosure is to provide a method for manufacturing a spectacle lens having a high cut ratio of light having a wavelength of 420 nm.

Solution to Problem

The present inventors have found that by impregnating a substrate with an immersion liquid containing a surfactant having a polyalkyleneoxy moiety and an alcohol having an aromatic substituent together with a benzophenone-based UV absorber, it is possible to obtain a spectacle lens favorably permeated by the benzophenone-based UV absorber and having a transmittance of light having a wavelength of 420 nm reduced.

The present disclosure relates to a method for manufacturing a spectacle lens, including a step of immersing a substrate in an immersion liquid containing a benzophenone-based UV absorber, a surfactant having a polyalkyleneoxy moiety, and an alcohol having an aromatic substituent, in which the substrate has a luminous transmittance of 70% or more after immersion.

Advantageous Effects of Invention

According to the above-described Example, it is possible to provide a method for manufacturing a spectacle lens having a transmittance of light having a wavelength of 420 nm reduced.

Brief Description of Drawings

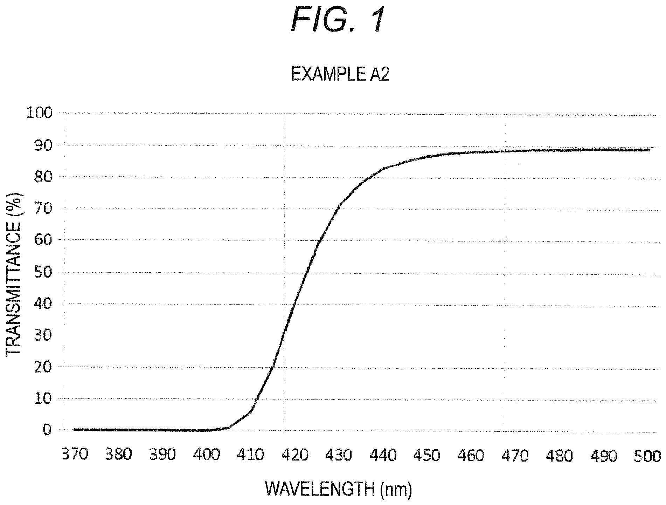

Fig. 1 is a spectrum of a transmittance of a substrate obtained in Example 2.

Description of Embodiments

[Method for manufacturing spectacle lens]

One Example of the present disclosure includes a step of immersing a substrate in an immersion liquid containing a benzophenone-based UV absorber, a surfactant having a polyalkyleneoxy moiety, and an alcohol having an aromatic substituent, in which the substrate has a luminous transmittance of 70% or more after immersion.

<Immersion liquid>

The immersion liquid contains a benzophenone-based UV absorber, a surfactant having a polyalkyleneoxy moiety, and an alcohol having an aromatic substituent. The immersion liquid preferably further contains a solvent.

[Benzophenone-based UV absorber]

The term "benzophenone-based UV absorber" means a compound having a benzophenone structure.
By selecting the benzophenone-based UV absorber, a spectacle lens having an excellent cut ratio of light having a wavelength of 420 nm can be obtained.
The benzophenone-based UV absorber is preferably a benzophenone compound having one or more and two or less hydroxy groups, and more preferably a benzophenone compound having two hydroxy groups.
Examples of the benzophenone-based UV absorber include 2,2'-dihydroxy-4-methoxybenzophenone, 2-hydroxy-4-methoxybenzophenone, 2-hydroxy-4-methoxy-5-sulfobenzophenone, and 2-hydroxy-4-octyloxybenzophenone.
These benzophenone-based UV absorbers can be used singly or in combination of two or more kinds thereof.
The benzophenone-based UV absorber is preferably 2,2'-dihydroxy-4-methoxybenzophenone from a viewpoint of improving a cut ratio of light having a wavelength of 420 nm.
The content of the benzophenone-based UV absorber in the immersion liquid is preferably 1 g/L or more, more preferably 3 g/L or more, and still more preferably 5 g/L or more. In addition, the content in the immersion liquid is preferably 30 g/L or less, more preferably 20 g/L or less, and still more preferably 15 g/L or less.

[Surfactant]

The immersion liquid contains a surfactant having a polyalkyleneoxy moiety, and preferably contains a surfactant having a polyethyleneoxy moiety from a viewpoint of improving permeability of the benzophenone-based UV absorber.
Examples of the surfactant having a polyalkyleneoxy moiety include a polyoxyalkylene alkyl ether, a polyoxyalkylene phenyl ether, a polyoxyalkylene alkyl phenol ether, a polyoxyalkylene alkyl ether sulfonate, a polyoxyalkylene phenyl ether sulfonate, a polyoxyalkylene alkylphenol ether sulfonate, a polyoxyalkylene alkyl ether sulfonate, a polyoxyalkylene phenyl ether sulfonate, and a polyoxyalkylene alkyl phenol ether sulfonate.
These surfactants can be used singly or in combination of two or more kinds thereof.
Examples of a commercially available product of the surfactant having a polyalkyleneoxy moiety include "Neonol 20" (manufactured by Seiken Kako Co., Ltd.).
The content of the surfactant having a polyalkyleneoxy moiety in the immersion liquid is preferably 0.1 mL/L or more, more preferably 1 mL/L or more, still more preferably 3 mL/L or more, and further still more preferably 5 mL/L or more. In addition, the content in the immersion liquid is preferably 50 mL/L or less, more preferably 35 mL/L or less, still more preferably 20 mL/L or less, and further still more preferably 10 mL/L or less.
The immersion liquid preferably further contains an alkyl sulfate having 6 or more and 20 or less carbon atoms from a viewpoint of further improving permeability of the benzophenone-based UV absorber and improving a cut ratio of light having a wavelength of 420 nm. An immersion liquid containing an alkyl sulfate having 6 or more and 20 or less carbon atoms obtains a particularly remarkable effect by immersing a substrate having a refractive index of 1.67 or more therein.
The number of carbon atoms of the alkyl sulfate is preferably 7 or more, more preferably 8 or more, and preferably 18 or less, preferably 14 or less, more preferably 10 or less. The alkyl sulfate is preferably a branched alkyl sulfate.
Examples of the alkyl sulfate having 6 or more and 20 or less carbon atoms include sodium hexyl sulfate, potassium hexyl sulfate, sodium octyl sulfate, potassium octyl sulfate, sodium 2-ethylhexyl sulfate, potassium 2-ethylhexyl sulfate, sodium decyl sulfate, and sodium dodecyl sulfate.
Among these compounds, sodium 2-ethylhexyl sulfate and potassium 2-ethylhexyl sulfate are preferable, and sodium 2-ethylhexyl sulfate is more preferable.

The content of the alkyl sulfate having 6 or more and 20 or less carbon atoms in the immersion liquid is preferably 0.5 mL/L or more, more preferably 1 mL/L or more, and still more preferably 2 mL/L or more. In addition, the content in the immersion liquid is preferably 30 mL/L or less, more preferably 20 mL/L or less, still more preferably 10 mL/L or less, and further still more preferably 5 mL/L or less.

[Alcohol having aromatic substituent]

The alcohol having an aromatic substituent is a compound having an effect of promoting permeation of a UV absorber. In addition, some of phenol-based carriers used in the field of dyeing of a spectacle lens or the like are unfavorable from a viewpoint of an operator's environment because of exhibiting a skin bleaching action or the like. However, by using an alcohol having an aromatic substituent, these problems can be solved.
Examples of the alcohol having an aromatic substituent include benzyl alcohol and cinnamyl alcohol.
Among these compounds, cinnamyl alcohol is preferable from a viewpoint of improving permeability of the benzophenone-based UV absorber and improving a cut ratio of light having a wavelength of 420 nm.
The content of the alcohol having an aromatic substituent in the immersion liquid is preferably 1 mL/L or more, more preferably 2 mL/L or more, and still more preferably 3 mL/L or more. In addition, the content in the immersion liquid is preferably 30 mL/L or less, more preferably 20 mL/L or less, and still more preferably 10 mL/L or less.

[Solvent]

The solvent is preferably an aqueous solvent, and more preferably water.
The aqueous solvent is a solvent containing 60% by mass or more of water. The content of water in the aqueous solvent is preferably 70% by mass or more, more preferably 80% by mass or more, still more preferably 90% by mass or more, and 100% by mass or less, more preferably 100% by mass.
Besides, the immersion liquid may contain a bluing agent or the like from a viewpoint of correcting a color tone.

<Substrate>

The substrate is, for example, a spectacle lens substrate.
Examples of a resin forming the substrate include a (thio)urethane resin, an episulfide resin, a polycarbonate resin, a polyamide resin, and a polyester resin. The (thio)urethane resin means at least one selected from the group consisting of a thiourethane resin and a urethane resin. Among these compounds, a (thio) urethane resin is preferable.

[(Thio)urethane resin]

Examples of the (thio)urethane resin include a polymer of a polyisocyanate compound and a polythiol compound and a polymer of a polyisocyanate compound and a polyol compound.
Examples of the polyisocyanate compound include an alicyclic isocyanate compound such as bis(isocyanatomethyl) cyclohexane, bis(isocyanatomethyl) bicyclo[2.2.1]heptane, hydrogenated 2,6-tolylene diisocyanate, hydrogenated meta- and para-phenylene diisocyanate, hydrogenated 2,4-tolylene diisocyanate, hydrogenated diphenylmethane diisocyanate, hydrogenated metaxylylene diisocyanate, hydrogenated paraxylylene diisocyanate, or isophorone diisocyanate; an isocyanate compound having no alicyclic ring or aromatic ring, such as meta- and para-phenylenediisocyanate, 2,6-tolylene diisocyanate, 2,4-tolylene diisocyanate, 4,4'-diphenylmethane diisocyanate, meta- and para-xylylene diisocyanate [bis(isocyanatomethyl) benzene], meta- and para-tetramethylxylylene diisocyanate, 2,6-naphthalene diisocyanate, 1,5-naphthalene diisocyanate, hexamethylene diisocyanate, octamethylene diisocyanate, 2,2,4-trimethylhexamethylene diisocyanate, tetramethylene diisocyanate, a biuret reaction product of hexamethylene diisocyanate, a trimer of hexamethylene diisocyanate, lysine diisocyanate, lysine triisocyanate, 1,6,11-undecane triisocyanate, or triphenylmethane triisocyanate; and a sulfur-containing isocyanate compound such as diphenyl disulfide-4,4'-diisocyanate, 2,2'-dimethyldiphenyl disulfide-5,5'-diisocyanate, 3,3'-dimethyldiphenyl disulfide-5,5'-diisocyanate, 3,3'-dimethyldiphenyl disulfide-6,6'-diisocyanate, 4,4'-dimethyldiphenyl disulfide-5,5'-diisocyanate, 3,3'-dimethoxydiphenyl disulfide-4,4'-diisocyanate, 4,4'-dimethoxydiphenyl disulfide-3,3'-diisocyanate, diphenyl sulfone-4,4'-diisocyanate, diphenyl sulfone-3,3'-diisocyanate, benzylidene sulfone-4,4'-diisocyanate, diphenylmethanesulfone-4,4'-diisocyanate, 4-methyldiphenylmethanesulfone-2,4'-diisocyanate, 4,4'-dimethoxydiphenylsulfone-3,3'-diisocyanate, 3,3'-dimethoxy-4,4'-diisocyanatodibenzylsulfone, 4,4'-dimethyldiphenylsulfone-3,3'-diisocyanate, 4,4'-di-tert-butyldiphenylsulfone-3,3'-diisocyanate, 4,4'-dimethoxybenzene ethylene disulfone-3,3'-diisocyanate, 4,4'-dichlorodiphenylsulfone-3,3'-diisocyanate, 4-methyl-3-isocyanatobenzenesulfonyl-4'-isocyanatophenol ester, 4-methoxy-3-isocyanatobenzenesulfonyl-4'-isocyanatophenol ester, 4-methyl-3-isocyanatobenzenesulfonylanilide-3'-methyl-4'-isocyanate, dibenzenesulfonyl-ethylenediamine-4,4'-diisocyanate, 4,4'-dimethoxybenzenesulfonyl-ethylenediamine-3,3'-diisocyanate, 4-methyl-3-isocyanatobenzenesulfonylanilide-4-methyl-3'-isocyanate, thiophene-2,5-diisocyanate, thiophene-2,5-diisocyanatomethyl, 1,4-dithiane-2,5-diisocyanate, 1,4-dithiane-2,5-diisocyanatomethyl, 1,4-dithiane-2,3-diisocyanatomethyl, 1,4-dithiane-2-isocyanatomethyl-5-isocyanatopropyl, 1,3-dithiolane-4,5-diisocyanate, 1,3-dithiolane-4,5-diisocyanatomethyl, 1,3-dithiolane-2-methyl-4,5-diisocyanatomethyl, 1,3-dithiolane-2,2-diisocyanatoethyl, tetrahydrothiophene-2,5-diisocyanate, tetrahydrothiophene-2,5-diisocyanatomethyl, tetrahydrothiophene-2,5-diisocyanatoethyl, or tetrahydrothiophene-3,4-diisocyanatomethyl. Among these compounds, an alicyclic isocyanate compound is preferable.

Examples of the polythiol compound include an aliphatic thiol such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl) methane, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl) cyclohexane, thiomalic acid bis(2-mercaptoethylester), 2,3-dimercaptosuccinic acid (2-mercaptoethyl ester), 2,3-dimercapto-1-propanol (2-mercaptoacetate), 2,3-dimercapto-1-propanol (3-mercaptoacetate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethyl)-1,3-propanediol, bis(2-mercaptoethyl) ether, ethylene glycol bis(2-mercaptoacetate), ethylene glycol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), or 1,2-bis(2-mercaptoethylthio)-3-mercaptopropane; an aromatic thiol such as 1,2-dimercaptobenzene, 1,3-dimercaptobenzene, 1,4-dimercaptobenzene, 1,2-bis(mercaptomethyl) benzene, 1,3-bis(mercaptomethyl) benzene, 1,4-bis(mercaptomethyl) benzene, 1,3-bis(mercaptoethyl) benzene, 1,4-bis(mercaptoethyl) benzene, 1,2-bis(mercaptomethoxy) benzene, 1,3-bis(mercaptomethoxy) benzene, 1,4-bis(mercaptomethoxy) benzene, 1,2-bis(mercaptoethoxy) benzene, 1,3-bis(mercaptoethoxy) benzene, 1,4-bis(mercaptoethoxy) benzene, 1,2,3-trimercaptobenzene, 1,2,4-trimercaptobenzene, 1,3,5-trimercaptobenzene, 1,2,3-tris(mercaptomethyl) benzene, 1,2,4-tris(mercaptomethyl) benzene, 1,3,5-tris(mercaptomethyl) benzene, 1,2,3-tris(mercaptoethyl) benzene, 1,2,4-tris(mercaptoethyl) benzene, 1,3,5-tris(mercaptoethyl) benzene, 1,2,3-tris(mercaptomethoxy) benzene, 1,2,4-tris(mercaptomethoxy) benzene, 1,3,5-tris(mercaptomethoxy) benzene, 1,2,3-tris(mercaptoethoxy) benzene, 1,2,4-tris(mercaptoethoxy) benzene, 1,3,5-tris(mercaptoethoxy) benzene, 1,2,3,4-tetramercaptobenzene, 1,2,3,5-tetramercaptobenzene, 1,2,4,5-tetramercaptobenzene, 1,2,3,4-tetrakis(mercaptomethyl) benzene, 1,2,3,5-tetrakis(mercaptomethyl) benzene, 1,2,4,5-tetrakis(mercaptomethyl) benzene, 1,2,3,4-tetrakis(mercaptoethyl) benzene, 1,2,3,5-tetrakis(mercaptoethyl) benzene, 1,2,4,5-tetrakis(mercaptoethyl) benzene, 1,2,3,4-tetrakis(mercaptoethyl) benzene, 1,2,3,5-tetrakis(mercaptomethoxy) benzene, 1,2,4,5-tetrakis(mercaptomethoxy) benzene, 1,2,3,4-tetrakis(mercaptoethoxy) benzene, 1,2,3,5-tetrakis(mercaptoethoxy) benzene, 1,2,4,5-tetrakis(mercaptoethoxy) benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methoxyphenyl) propane-2,2-dithiol, 1,3-diphenylpropane-2,2-dithiol, phenylmethane-1,1-dithiol, or 2,4-di(p-mercaptophenyl) pentane; a halogen-substituted aromatic thiol including a chlorine-substituted product and a bromine-substituted product, such as 2,5-dichlorobenzene-1,3-dithiol, 1,3-di(p-chlorophenyl) propane-2,2-dithiol, 3,4,5-tribromo-1,2-dimercaptobenzene, or 2,3,4,6-tetrachloro-1,5-bis(mercaptomethyl) benzene; an aromatic thiol containing a sulfur atom in addition to a mercapto group, such as 1,2-bis(mercaptomethylthio) benzene, 1,3-bis(mercaptomethylthio) benzene, 1,4-bis(mercaptoethylthio) benzene, 1,2-bis(mercaptoethylthio) benzene, 1,3-bis(mercaptoethylthio) benzene, 1,4-bis(mercaptoethylthio) benzene, 1,2,3-tris(mercaptomethylthio) benzene, 1,2,4-tris(mercaptomethylthio) benzene, 1,3,5-tris(mercaptomethylthio) benzene, 1,2,3-tris(mercaptoethylthio) benzene, 1,2,4-tris(mercaptoethylthio) benzene, 1,3,5-tris(mercaptoethylthio) benzene, 1,2,3,4-tetrakis(mercaptomethylthio) benzene, 1,2,3,5-tetrakis(mercaptomethylthio) benzene, 1,2,4,5-tetrakis(mercaptomethylthio) benzene, 1,2,3,4-tetrakis(mercaptoethylthio) benzene, 1,2,3,5-tetrakis(mercaptoethylthio) benzene, 1,2,4,5-tetrakis(mercaptoethylthio) benzene, or nucleus alkylated products thereof; an aliphatic thiol containing a sulfur atom in addition to a mercapto group, such as bis(mercaptomethyl) sulfide, bis(mercaptoethyl) sulfide, bis(mercaptopropyl) sulfide, bis(mercaptomethylthio) methane, bis(2-mercaptoethylthio) methane, bis(3-mercaptopropropylthio) methane, 1,2-bis(mercaptomethylthio) ethane, 1,2-bis(2-mercaptoethylthio) ethane, 1,2-bis(3-mercaptopropylthio) ethane, 1,3-bis(mercaptomethylthio) propane, 1,3-bis(2-mercaptoethylthio) propane, 1,3-bis(3-mercaptopropylthio) propane, 1,2-bis(2-mercaptoethylthio)-3-mercaptopropane, 2-mercaptoethylthio-1,3-propanedithiol, 1,2,3-tris(mercaptomethylthio) propane, 1,2,3-tris(2-mercaptoethylthio) propane, 1,2,3-tris(3-mercaptopropylthio) propane, tetrakis(mercaptomethylthiomethyl) methane, tetrakis(2-mercaptoethylthiomethyl) methane, tetrakis(3-mercaptopropylthiomethyl) methane, bis(2,3-dimercaptopropyl) sulfide, 2,5-dimercapto-1,4-dithiane, bis(mercaptomethyl) disulfide, bis(mercaptoethyl) disulfide, bis(mercaptopropyl) disulfide, thioglycolates thereof, mercaptopropionates thereof, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxypropyl sulfide bis(2-mercaptoacetate), hydroxypropyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), hydroxypropyl disulfide bis(2-mercaptoacetate), hydroxypropyl disulfide bis(3-mercaptopropionate), 2-mercaptoethyl ether bis(2-

5

mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate), thioglycolic acid (2-mercaptoethyl ester), thiodipropionic acid bis(2-mercaptoethyl ester), 4,4'-thiodibutyric acid bis(2-mercaptoethyl ester), dithiodiglycolic acid bis(2-mercaptoethyl ester), dithiodipropionic acid bis(2-mercaptoethyl ester), 4,4'-dithiodibutyric acid bis(2-mercaptoethyl ester), thiodiglycolic acid bis(2,3-dimercaptopropyl ester), thiodipropionic acid bis(2,3-dimercaptopropyl ester), dithiodiglycolic acid bis(2,3-dimercaptopropyl ester), dithiodipropionic acid bis(2,3-dimercaptopropyl ester), 4-mercaptomethyl-3,6-dithiaoctane-1,8-dithiol, bis(mercaptomethyl)-3,6,9-trithia-1,11-undecanedithiol, or bis(1,3-dimercapto-2-propyl) sulfide; and a heterocyclic compound containing a sulfur atom in addition to a mercapto group, such as 3,4-thiophenedithiol, tetrahydrothiophene-2,5-dimercaptomethyl, 2,5-dimercapto-1,3,4-thiadiazole, 2,5-dimercapto-1,4-dithiane, or 2,5-dimercaptomethyl-1,4-dithiane.

Examples of the polyol compound include an aliphatic polyol such as ethylene glycol, diethylene glycol, propylene glycol, dipropylene glycol, butylene glycol, neopentyl glycol, glycerin, trimethylolethane, trimethylolpropane, butanetriol, 1,2-methyl glucoside, pentaerythritol, dipentaerythritol, tripentaerythritol, triethylene glycol, polyethylene glycol, tris(2-hydroxyethyl) isocyanurate, cyclobutanediol, cyclopentanediol, cyclohexanediol, cycloheptanediol, cyclooctanediol, bicyclo[4.3.0]-nonanediol, dicyclohexanediol, tricyclo[5.3.1.1]dodecanediol, spiro[3.4]octanediol, or butyl hexanediol; an aromatic polyol such as dihydroxy naphthalene, trihydroxy naphthalene, tetrahydroxynaphthalene, dihydroxy benzene, benzene triol, trihydroxy phenanthrene, bisphenol A, bisphenol F, xylylene glycol, or tetrabromobisphenol A, and an addition reaction product thereof with an alkylene oxide such as ethylene oxide or propylene oxide; bis-[4-(hydroxyethoxy) phenyl] sulfide, bis-[4-(2-hydroxypropoxy) phenyl] sulfide, bis-[4-(2,3-dihydroxypropoxy) phenyl] sulfide, bis-[4-(4-hydroxycyclohexyloxy) phenyl] sulfide, bis-[2-methyl-4-(hydroxyethoxy)-6-butylphenyl] sulfide, and a compound obtained by adding ethylene oxide and/or propylene oxide with an average of 3 molecules or less per hydroxy group to each of these compounds; and a polyol containing a sulfur atom, such as di-(2-hydroxyethyl) sulfide, 1,2-bis-(2-hydroxyethylmercapto) ethane, bis(2-hydroxyethyl) disulfide, 1,4-dithiane-2,5-diol, bis(2,3-dihydroxypropyl) sulfide, tetrakis(4-hydroxy-2-thiabutyl) methane, bis(4-hydroxyphenyl) sulfone (trade name: bisphenol S), tetrabromobisphenol S, tetramethylbisphenol S, 4,4'-thiobis(6-tert-butyl-3-methylphenol), or 1,3-bis(2-hydroxyethylthioethyl)-cyclohexane.

In addition, in order to modify physical properties such as heat resistance and refractive index, for example, in addition to a monomer forming an episulfide resin described below, another monomer such as diethylene glycol allyl carbonate can be added to these monomers.

As the combination of a polyisocyanate compound and a polythiol compound,

(1) bis(isocyanatomethyl) cyclohexane, pentaerythritol tetrakis(2-mercaptoacetate), and 2,5-dimercapto-1,4-dithiane,
(2) bis(isocyanatomethyl) bicyclo[2.2.1]heptane, pentaerythritol tetrakis(3-mercaptopropionate), and 1,2-bis(2-mercaptoethylthio)-3-mercaptopropane, and
(3) xylylene diisocyanate, and a mixture of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol, are preferable.

In a case where a (thio)urethane resin is used as the substrate, the (thio)urethane resin is polymerized from a raw material in which the total mass of the polyisocyanate compound and the polythiol compound is preferably 60 parts by mass or more, more preferably 80 parts by mass or more, and still more preferably 90 parts by mass or more relative to 100 parts by mass of the total amount of monomers.

[Episulfide resin]

Examples of the episulfide resin include a polymer formed of a monomer containing a monomer having an episulfide group (epithio group). Examples of the monomer having an episulfide group include an episulfide compound having an alicyclic skeleton, such as 1,3- and 1,4-bis(β-epithiopropylthio) cyclohexane, 1,3- and 1,4-bis(β-epithiopropylthiomethyl) cyclohexane, bis[4-(β-epithiopropylthio) cyclohexyl] methane, 2,2-bis[4-(β-epithiopropylthio) cyclohexyl] propane, or bis[4-(β-epithiopropylthio) cyclohexyl] sulfide; an episulfide compound having an aromatic skeleton, such as 1,3- and 1,4-bis(β-epithiopropylthio) benzene, 1,3- and 1,4-bis(β-epithiopropylthiomethyl) benzene, bis[4-(β-epithiopropylthio) phenyl] methane, 2,2-bis[4-(β-epithiopropylthio) phenyl] propane, bis[4-(β-epithiopropylthio) phenyl] sulfide, bis[4-(β-epithiopropylthio) phenyl] sulfine, or 4,4-bis(β-epithiopropylthio) biphenyl; an episulfide compound having a dithiane ring skeleton, such as 2,5-bis(β-epithiopropylthiomethyl)-1,4-dithiane, 2,5-bis(β-epithiopropylthioethyl thiomethyl)-1,4-dithiane, 2,5-bis(β-epithiopropylthioethyl)-1,4-dithiane, or 2,3,5-tri(β-epithiopropylthioethyl)-1,4-dithiane; and an episulfide compound having an aliphatic skeleton, such as 2-(2-β-epithiopropylthioethylthio)-1,3-bis(β-epithiopropylthio) propane, 1,2-bis[(2-β-epithiopropylthioethyl)thio]-3-(β-epithiopropylthio) propane, tetrakis(β-epithiopropylthiomethyl) methane, 1,1,1-tris(β-epithiopropylthiomethyl) propane, or bis-(β-epithiopropyl) sulfide.

In order to modify lens physical properties such as impact resistance and processability, for example, it is also possible to add another monomer for an optical member, such as the above-described monomers for forming a (thio)urethane resin.

In addition, a diethylene glycol bisallyl carbonate-based monomer can be added to the monomer forming a (thio)urethane resin or an episulfide resin.

As the diethylene glycol bisallyl carbonate-based monomer, diethylene glycol bisallyl carbonate alone and a monomer mixture of diethylene glycol bisallyl carbonate and a monomer copolymerizable with diethylene glycol bisallyl carbonate are applicable. Specific examples of the copolymerizable monomer include an aromatic vinyl compound such as styrene, α-methylstyrene, vinyltoluene, chlorostyrene, chloromethylstyrene, or divinylbenzene; a mono (meth)acrylate such as methyl (meth)acrylate, n-butyl (meth)acrylate, n-hexyl (meth)acrylate, cyclohexyl (meth)acrylate, 2-ethylhexyl (meth)acrylate, methoxydiethylene glycol (meth)acrylate, methoxypolyethylene glycol (meth)acrylate, 3-chloro-2-hydroxypropyl (meth)acrylate, stearyl (meth)acrylate, lauryl (meth)acrylate, phenyl (meth)acrylate, glycidyl (meth)acrylate, or benzyl methacrylate; a mono (meth)acrylate having a hydroxy group, such as 2-hydroxyethyl (meth)acrylate, 2-hydroxypropyl (meth)acrylate, 3-hydroxypropyl (meth)acrylate, 3-phenoxy-2-hydroxypropyl (meth)acrylate, or 4-hydroxybutyl (meth)acrylate; a di(meth)acrylate such as ethylene glycol di(meth)acrylate, diethylene glycol di(meth)acrylate, triethylene glycol di(meth)acrylate, polyethylene glycol di(meth)acrylate, 1,3-butylene glycol di(meth)acrylate, 1,6-hexanediol di(meth)acrylate, neopentyl glycol di(meth)acrylate, polypropylene glycol di(meth)acrylate, 2-hydroxy-1,3-di(meth)acryloxypropane, 2,2-bis[4-(meth)acryloxyethoxy) phenyl] propane, 2,2-bis[4-((meth)acryloxy-diethoxy)phenyl] propane, or 2,2-bis[4-((meth)acryloxy-polyethoxy)phenyl] propane; a tri(meth)acrylate such as trimethylolpropane trimethacrylate or tetramethylolmethane trimethacrylate; a tetra(meth)acrylate such as tetramethylolmethane tetra(meth)acrylate; diallyl phthalate, diallyl isophthalate, and diallyl terephthalate.

In a case where the episulfide resin is used as the substrate, the amount of a monomer having an episulfide group is preferably 60 parts by mass or more, more preferably 80 parts by mass or more, and still more preferably 90 parts by mass or more relative to 100 parts by mass of the total amount of monomers.

The thickness and diameter of the substrate are not particularly limited. However, the thickness is usually about 1 to 30 mm, and the diameter is usually about 50 to 100 mm.

The substrate has a refractive index ne of preferably 1.53 or more, more preferably 1.55 or more, still more preferably 1.58 or more, further still more preferably 1.60 or more, further still more preferably 1.67 or more, and preferably 1.80 or less, more preferably 1.70 or less, still more preferably 1.67 or less.

(Pretreatment of substrate)

The substrate may be subjected to a pretreatment such as a cleaning treatment or a surface treatment before immersion from a viewpoint of enhancing affinity with the benzophenone-based UV absorber.

Examples of the cleaning treatment include an ozone treatment and a plasma treatment. If a surface of the substrate to be dyed is subjected to the ozone treatment or the plasma treatment, an organic substance attached to the surface of the substrate is removed, and hydrophilicity of the surface of the substrate is enhanced. Therefore, affinity between an immersion liquid and the surface of the substrate is considered to be improved.

The ozone treatment and the plasma treatment are not particularly limited, and it is only required to perform a cleaning treatment using a known ozone treatment apparatus or plasma treatment apparatus. A plasma output in the plasma treatment is preferably 50 to 500 W, more preferably 100 to 300 W, and still more preferably 200 to 300 W. The degree of vacuum is preferably substantially vacuum pressure (for example, the degree of vacuum is $1 \times 10^{-3}$ to $1 \times 10^4$ Pa, more preferably $1 \times 10^{-3}$ to $1 \times 10^3$ Pa, and still more preferably $1 \times 10^{-2}$ to $5 \times 10^2$ Pa).

<Immersion conditions>

The temperature of the immersion liquid when the substrate is immersed therein is preferably 50°C or higher, more preferably 60°C or higher, still more preferably 70°C or higher, further still more preferably 80°C or higher, and further still more preferably 90°C or higher. The temperature is preferably 120°C or lower, more preferably 110°C or lower, still more preferably 100°C or lower, further still more preferably 98°C or lower, and further still more preferably 95°C or lower. Note that immersion may be performed in a pressure-resistant container in a case where the immersion temperature exceeds 100°C.

Immersion time in the immersion liquid is preferably one minute or more, more preferably two minutes or more, and still more preferably 30 minutes or more. In addition, the immersion time is preferably 24 hours or less, more preferably 20 hours or less, still more preferably 15 hours or less, further still more preferably 12 hours or less, further still more preferably 9 hours or less, and further still more preferably 7 hours or less from a viewpoint of suppressing surface roughness.

<Heating Step>

After the above step, a manufacturing method according to one Example preferably further includes a step of drying and heating the substrate after immersion in order to fix the UV absorber.

The substrate withdrawn from the immersion liquid may be subjected to water washing or a drying treatment if necessary. Conditions such as drying temperature and drying time can be appropriately selected.

The heating temperature is preferably 80°C or higher, more preferably 90°C or higher, still more preferably 100°C or higher, and further still more preferably 110°C or higher. In addition, the heating temperature is preferably 140°C or lower, and more preferably 125°C or lower.

The heating time is preferably one minute or more, more preferably 10 minutes or more, and more preferably 30 minutes or more. In addition, the heating time is preferably three hours or less, more preferably one hour and 30 minutes or less, and still more preferably 60 minutes or less.

In the obtained substrate, the cut ratio of light having a wavelength of 420 nm is preferably 30% or more, more preferably 40% or more, still more preferably 50% or more, further still more preferably 60% or more, further still more preferably 70% or more, and further still more preferably 80% or more. In addition, the cut ratio of the light having a wavelength of 420 nm is preferably 99% or less, and more preferably 95% or less, for example. The cut ratio of the light having a wavelength of 420 nm is a value obtained from a transmittance obtained by measuring a transmission spectrum using an ultraviolet-visible spectrophotometer.

The obtained substrate has a luminous transmittance of preferably 70% or more, more preferably 75% or more, still more preferably 80% or more in order to secure transparency of the spectacle lens. The luminous transmittance is preferably 99% or less, more preferably 98% or less, and still more preferably 95% or less. The luminous transmittance is a value obtained by the method prescribed in JIS T7333-2005.

The method for manufacturing a spectacle lens according to an embodiment of the present disclosure may include a step of further laminating a functional layer on the substrate after the immersion step.

As the functional layer, for example, at least one selected from the group consisting of a hard coat layer, a primer layer, an antireflection film, and a water repellent film can be mentioned.

The hard coat layer is disposed for improving scratch resistance and preferably can be formed by applying a coating liquid containing an organic silicon compound, a fine particulate inorganic substance such as tin oxide, silicon oxide, zirconium oxide, or titanium oxide, or the like.

The primer layer is disposed for improving impact resistance, and contains, for example, polyurethane as a main component. Here, the content of polyurethane is preferably 50% by mass or more in the primer layer.

Examples of the antireflection film include a film obtained by laminating silicon oxide, titanium dioxide, zirconium oxide, tantalum oxide, or the like.

The water repellent film can be formed using an organic silicon compound having a fluorine atom.

[Spectacle lens]

The spectacle lens is a spectacle lens obtained by the above-described method, that is, a spectacle lens in which a substrate is impregnated with a benzophenone-based UV absorber by a dyeing method.

In the spectacle lens, the cut ratio of light having a wavelength of 420 nm is preferably 30% or more, more preferably 40% or more, still more preferably 50% or more, further still more preferably 60% or more, further still more preferably 70% or more, and further still more preferably 80% or more. In addition, the cut ratio of the light having a wavelength of 420 nm is preferably 99% or less, and more preferably 95% or less, for example.

The spectacle lens has a luminous transmittance of preferably 70% or more, more preferably 75% or more, still more preferably 80% or more in order to secure transparency of the spectacle lens. The luminous transmittance is preferably 99% or less, more preferably 98% or less, and still more preferably 95% or less.

In the present disclosure, as for the examples of components, contents, and physical properties, matters exemplified or described as a preferable range in the detailed description of the invention may be combined with each other arbitrarily.

In addition, by adjusting the composition described in Examples so as to be the composition described in the detailed description of the invention, an embodiment according to the disclosure can be performed in a similar manner to Examples in the entire claimed composition range.

[Examples]

Hereinafter, specific Examples will be described, but the present claims are not limited by the following Examples. Measurement methods and evaluation methods of various physical properties were performed by the following methods.

[Measurement method and evaluation method]

[Transmittance]

A transmittance was measured using a spectrophotometer U-4100 (manufactured by Hitachi High-Technologies Corporation).

(Cut ratio of light of 420 nm)

In measurement of the transmittance, a cut ratio was calculated from the transmittance of light having a wavelength of 420 nm using the following formula. In Tables, the cut ratio is indicated as cut ratio of light of 420 nm.

$$\text{Cut ratio of light having a wavelength of 420 nm} =$$

$$[1 - \text{transmittance of light of 420 nm}] \times 100$$

(Luminous transmittance)

In measurement of the transmittance, an average transmittance of light having a wavelength of 380 nm to 780 nm was defined as a luminous transmittance.

[Suppression of surface roughness]

For suppression of surface roughness, a spectacle lens substrate after immersion was visually observed and evaluated according to the following criteria.

A: No surface roughness is observed
B: Surface roughness is slightly observed
C: Surface roughness is significantly observed

[Manufacture of spectacle lens]

Examples A1 to A3, B1 to B2, and B4, and Comparative Examples A1 and A2

A spectacle lens substrate was immersed in the immersion liquid illustrated in Table 1 or 2 and immersed without stirring the immersion liquid at the temperature and during the time illustrated in Table 1 or 2. The obtained substrate was measured and evaluated by the above method, and results thereof are illustrated in Table 1 or 2. Fig. 1 is a spectrum of the transmittance of a substrate obtained in Example A2.

Examples A4 to A6 and B3

A treatment was performed under similar conditions to Example A1 except that heating was performed under the conditions illustrated in Table 1 or Table 2 after removal from the immersion liquid. The obtained substrate was measured and evaluated by the above method, and results thereof are illustrated in Table 1 or 2.

[Table 1]

| Example/Comparative Example | | | Example A1 | Example A2 | Example A3 | Example A4 | Example A5 | Example A6 | Comparative Example A1 | Comparative Example A2 |
|---|---|---|---|---|---|---|---|---|---|---|
| Immersion liquid | UV absorber (g) | Kemisorb 111 | 5 | 5 | 5 | 5 | 5 | 5 | 5 | - |
| | | Kemisorb 73 | - | - | - | - | - | - | - | 5 |
| | Surfactant (mL) | Neonol 20 | 20 | 20 | 20 | 20 | 20 | 20 | 20 | |
| | | Nicca Sunsolt 7000 | - | - | - | - | - | - | - | 20 |
| | | Sintrex | - | - | - | - | - | - | - | - |
| | Immersion promotor (mL) | Cinnamyl alcohol | 5 | 5 | 5 | 5 | 5 | 5 | - | 5 |
| | Pure water (mL) | | 1000 | 1000 | 1000 | 1000 | 1000 | 1000 | 1000 | 500 |
| Immersion step | Lens substrate | | 1.60 | 1.60 | 1.60 | 1.60 | 1.60 | 1.60 | 1.60 | 1.60 |
| | Immersion temperature (°C) | | 93 | 93 | 93 | 93 | 93 | 93 | 93 | 93 |
| | Immersion time (h) | | 2 | 4 | 6 | 2 | 4 | 6 | 3 | 2 |
| Heating step | Presence or absence | | Absence | Absence | Absence | Presence | Presence | Presence | Absence | Absence |
| | Heating temperature (°C) | | - | - | - | 115 | 115 | 115 | - | - |
| | Heating time (min) | | - | - | - | 40 | 40 | 40 | - | - |
| Evaluation results | Cut ratio of light of 420 nm (%) | | 59.16 | 70.86 | 78.86 | 62.88 | 76.14 | 83.5 | 54.15 | 13.25 |
| | Luminous transmittance (%) | | 80.76 | 80.42 | 79.58 | 80.29 | 79.64 | 78.94 | 79.9 | 84.78 |
| | Suppression of surface roughness | | A | A | A | A | A | A | A | A |

EP 3 521 908 A1

[Table 2]

| Example/Comparative Example | | | Example B1 | Example B2 | Example B3 | Example B4 |
|---|---|---|---|---|---|---|
| Immersion liquid | UV absorber (g) | Kemisorb 111 | 5 | 5 | 5 | 5 |
| | Surfactant (mL) | Neonol 20 | 0.5 | 0.5 | 0.5 | 0.5 |
| | | Sintrex | 6 | 6 | 6 | 6 |
| | Immersion promotor (mL) | Cinnamyl alcohol | 6 | 6 | 6 | 6 |
| | Pure water (mL) | | 1000 | 1000 | 1000 | 1000 |
| Immersion step | Lens substrate | | 1.67 | 1.67 | 1.67 | 1.67 |
| | Immersion temperature (°C) | | 93 | 93 | 93 | 93 |
| | Immersion time (h) | | 4 | 6 | 4 | 6 |
| Heating step | Presence or absence | | Absence | Absence | Presence | Presence |
| | Heating temperature (°C) | | - | - | 115 | 115 |
| | Heating time (min) | | - | - | 40 | 40 |
| Evaluation results | Cut ratio of light of 420 nm (%) | | 37.47 | 41.51 | 40.52 | 45.12 |
| | Luminous transmittance (%) | | 80.57 | 80.29 | 80.18 | 79.86 |
| | Suppression of surface roughness | | A | A | A | A |

The components illustrated in Table 1 and Table 2 are as follows.

Kemisorb 111: benzophenone-based UV absorber (2,2'-dihydroxy-4-methoxybenzophenone) "trade name: Kemisorb 111" (manufactured by Chemipro Kasei Co., Ltd.)
Kemisorb 73: benzotriazole-based UV absorber "trade name: Kemisorb 73" (manufactured by Chemipro Kasei Co., Ltd.)
Neonol 20: polyoxyethylene stearylphenol ether sulfonate (35% by mass aqueous solution) "trade name: Neonol 20" (manufactured by Seiken Kako Co., Ltd.)
Nicca Sunsolt 7000: anionic surfactant "trade name: Nicca Sunsolt 7000" (manufactured by Nicca Chemical Co., Ltd.)
Sintrex: sodium 2-ethylhexyl sulfate (40% by mass aqueous solution) "trade name: Sintrex EH-R" (manufactured by NOF Corporation)
Lens substrate 1.60: "trade name: EYAS" (manufactured by HOYA Corporation)
Lens substrate 1.67: "trade name: EYNOA" (manufactured by HOYA Corporation)

From comparison between Examples A1 to A6 and Comparative Examples A1 and A2, each using a substrate having a refractive index of 1.60, it is found that use of an immersion liquid containing a benzophenone-based UV absorber, a surfactant having a polyalkyleneoxy moiety, and an alcohol having an aromatic substituent can increase a cut ratio of light having a wavelength of 420 nm.
Also in Examples B1 to B4 each using a substrate having a refractive index of 1.67, permeated by a UV absorber with more difficulty than the substrate having a refractive index of 1.60, it is found that use of an immersion liquid containing a benzophenone-based UV absorber, a surfactant having a polyalkyleneoxy moiety, and an alcohol having an aromatic substituent can increase a cut ratio of light having a wavelength of 420 nm.
Finally, an embodiment of the present disclosure will be summarized.
An embodiment of the present disclosure relates to a method for manufacturing a spectacle lens, including a step of immersing a substrate in an immersion liquid containing a benzophenone-based UV absorber, a surfactant having a polyalkyleneoxy moiety, and an alcohol having an aromatic substituent, in which the substrate has a luminous transmittance of 70% or more after immersion.
According to the above-described embodiment, it is possible to provide a method for manufacturing a spectacle lens having a high cut ratio of light having a wavelength of 420 nm.

The embodiment disclosed herein is exemplary in all respects, and it should be considered that the embodiment is not restrictive. The scope of the present disclosure is defined not by the above description but by claims, and intends to include all modifications within meaning and a scope equal to claims.

## Claims

1. A method for manufacturing a spectacle lens, comprising
a step of immersing a substrate in an immersion liquid containing a benzophenone-based UV absorber, a surfactant having a polyalkyleneoxy moiety, and an alcohol having an aromatic substituent, wherein
the substrate has a luminous transmittance of 70% or more after immersion.

2. The method for manufacturing a spectacle lens according to claim 1, wherein the benzophenone-based UV absorber is 2,2'-dihydroxy-4-methoxybenzophenone.

3. The method for manufacturing a spectacle lens according to claim 1 or 2, wherein the alcohol having an aromatic substituent is cinnamyl alcohol.

4. The method for manufacturing a spectacle lens according to any one of claims 1 to 3, wherein the immersion liquid further contains an alkyl sulfate having 6 or more and 20 or less carbon atoms.

5. The method for manufacturing a spectacle lens according to any one of claims 1 to 4, wherein the substrate has a refractive index of 1.60 to 1.70.

6. The method for manufacturing a spectacle lens according to any one of claims 1 to 5, further comprising a step of drying and heating a substrate after immersion.

# FIG. 1

EXAMPLE A2

## INTERNATIONAL SEARCH REPORT

| International application No. |
|---|
| PCT/JP2017/035616 |

| A. CLASSIFICATION OF SUBJECT MATTER |
|---|
| G02C7/10(2006.01)i, G02B5/22(2006.01)i |

According to International Patent Classification (IPC) or to both national classification and IPC

| B. FIELDS SEARCHED |
|---|

Minimum documentation searched (classification system followed by classification symbols)
G02C7/10, G02B5/22, C09K3/00

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | WO 2014/133110 A1 (Mitsui Chemicals, Inc.), 04 September 2014 (04.09.2014), paragraph [0110] & US 2016/0017218 A1 paragraph [0219] & US 2015/0370094 A1      & US 2016/0304701 A1 & US 2016/0313575 A1      & WO 2014/133111 A1 & WO 2015/088011 A1      & WO 2015/088013 A1 & WO 2015/088015 A1 | 1-6 |
| Y | JP 2014-47255 A (Hoya Corp.), 17 March 2014 (17.03.2014), claim 5; paragraph [0019] (Family: none) | 1-6 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 October 2017 (12.10.17) | 24 October 2017 (24.10.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/035616

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-134345 A (JGC Catalysts and Chemicals Ltd.), 08 July 2013 (08.07.2013), claim 1; paragraphs [0033], [0080] to [0081] (Family: none) | 4 |

Form PCT/ISA/210 (continuation of second sheet) (January 2015)

**EP 3 521 908 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5105772 A